Europäisches Patentamt

European Patent Office

Office européen des brevets

(11) Publication number: **0 450 197 A1**

# EUROPEAN PATENT APPLICATION

(21) Application number: 90200792.1

(22) Date of filing: 02.04.90

(51) Int. Cl.⁵: **C08J 9/02**, C08G 18/48,
C08G 18/76, //(C08J9/02,
C08L75:04),(C08G18/48,101:00)

The title of the invention has been amended (Guidelines for Examination in the EPO, A-III, 7.3).

(43) Date of publication of application:
**09.10.91 Bulletin 91/41**

(84) Designated Contracting States:
**NL**

(71) Applicant: SHELL INTERNATIONALE
RESEARCH MAATSCHAPPIJ B.V.
Carel van Bylandtlaan 30
NL-2596 HR Den Haag(NL)

(72) Inventor: **Jones, David Russel**
**Avenue Jean Monnet 1**
**B-1348 Ottignies, Louvain-la-Neuve(BE)**
Inventor: **Louche, Didier Pascal Joseph**
**Avenue Jean Monnet 1**
**B-1348 Ottignies, Louvain-la-Neuve(BE)**
Inventor: **Zuta, Reinhart Berthold**
**Avenue Jean Monnet 1**
**B-1348 Ottignies, Louvain-la-Neuve(BE)**

(74) Representative: **Tuijn, Jan Warnaar et al**
**Shell Internationale Research Maatschappij**
**B.V., Patents, Licensing & Trade Marks**
**Division, P.O. Box 302**
**NL-2501 CH The Hague(NL)**

(54) **Foam formulations suitable for preparing water-blown heat-insulating material using polyols as softening point improvers and heat-insulating material obtained therewith.**

(57) A foam formulation, useful in the preparation of water-blown heat-insulating material, comprising (i) one or more polyols, (ii) one or more organic polyisocyanates, (iii) water, and (iv) auxiliary materials known in the art, characterized in that the polyol or polyol mixture has an average functionality (Fn) varying from 2.7 to 4.3; a hydroxyl value (OHv) of 250 to 500 mg KOH/g, and a viscosity measured at 20 °C of between 350 mPa.s and 2300 mPa.s; the use of said polyol or polyol mixture as softening point improver in a process of preparing water-blown heat-insulating material, and the water-blown heat-insulating material so prepared.

The present invention relates to foam formulations suitable for preparing water-blown heat-insulating material, the use of a softening point improving polyol (blend) in a process for preparing water-blown heat-insulating material, and heat-insulating material obtained therewith.

Polyurethane foams are known to be suitable for use as heat-insulating materials in many applications, such as for instance district heating pipe systems. Thus, polyurethane foam-based insulating materials have good heat-insulation properties and durability, both initially as well as upon ageing (at elevated temperatures).

Because several fully halogenated hydrocarbons (chlorofluorocarbons, commonly referred to as CFC's) normally used as blowing agent are believed to cause environmental problems (for instance their role in the deterioration of the stratospheric ozone layer), there is much effort in research for developing an alternative blowing agent that may (partly or wholly) replace the halogenated hydrocarbon as blowing agent in the standard foam formulations.

It was recognised that water, functioning as a chemical blowing agent, might replace the objected halogenated hydrocarbons. For example European patent application published under No. 0,358,282 discloses foam formulations useful in the preparation of soft flexible polyurethane foam comprising water to which a polyacrylate is added as replacement.

Then, the following (intermediate) reaction(s) take(s) place:

- 2 - 1) R-N=C=O + $H_2O$ -> R-N(H)-C(O)-OH
2) R-N(H)-C(O)-OH -> $R-NH_2$ + $CO_2$

$$3) \quad \underline{R-N=C=O \; + \; R-NH_2 \quad \rightarrow \quad R-N(H)-C(O)-N(H)-R}$$
$$2 \; R-N=C=O \; + \; H_2O \quad \rightarrow \quad R-N(H)-C(O)-N(H)-R \; + \; CO_2$$

Foam formulations useful in the preparation of heat-insulating materials of intricate dimensions, such as pipe-insulations, must i.a. have sufficient flow properties to ensure homogeneity throughout the volume to be filled, e.g., the length of the pipe-insulation, usually being more than 3 metres long. Moreover, adhesion of the in-situ produced foam core to the casings of the space to be insulated, for example both the inner side of the outer pipe (e.g., corona-treated HDPE) and adhesion to the outer side of the inner pipe (e.g., sand-blasted steel) of said pipe-insulation, must be excellent. Often, other requirements such as a minimum shear strength and filling density of the formed article must also be met (cf. the CEN and AMPA norms for pipe-insulation).

Applicants discovered when replacing CFC-11 as the blowing agent by water in the standard formulation, that the viscosity of the polyol component became very high and that the adhesion of the foam to outer and/or inner casings deteriorated. They found that these disadvantages could be overcome by lowering the viscosity of the polyol (blend) in the formulation as far as possible. This can e.g. be effected by lowering the average nominal functionality (Fn) and the hydroxyl value (OHv) of the polyol (blend). Applicants also recognized that, to be acceptable, the water-blown heat-insulating material should meet a further requirement, i.e., the need to have an adequate dimensional stability at elevated working temperatures.

Thus, whereas a standard CFC-blown pipe-insulation is not easily softened at working temperatures of up to 130 °C, water-blown pipe-insulations from low-viscosity polyols were found to soften at, or even below such temperatures. The result of such softening is that the inner pipe, instead of being isolated by the foam core, due to gravitational and other forces may come in contact with the (colder) outer pipe, resulting in inadequate insulation. Although the inner pipe may in principle be kept in place by other means of support (studs, spacers etc.), the installation of such supports may cause cost increases due to labour and material costs, reduction in insulating properties, and therefore the more ideal situation would be where the inner pipe is sufficiently supported by the foam core.

As a result of research and experimentation it was found that to ensure a softening point of the water-blown heat-insulating material of 130 °C or above, (i.e., retain the softening point as compared to the CFC-blown heat-insulating material) both the Fn of the polyol or polyol blend used, its OHv, and, (in addition, or as a consequence thereof) its viscosity should be as high as possible.

It will be appreciated that the problem of ensuring both adequate filling and adhesion, and high softening point is the subject of continuous and extensive research.

It is the object of the invention to select polyols that upon use in foam-formulations employed in water-blown systems at the one hand ensure sufficient flow and adequate adhesion, and at the other hand lead to water-blown materials having a softening point above 130 °C.

Accordingly, the present invention provides for a foam formulation, useful in the preparation of water-blown heat-insulating material, comprising (i) a polyol or polyol blend, (ii) one or more organic polyisocyanates, (iii) water, and (iv) auxiliary materials known in the art, wherein the polyol or polyol blend has an average nominal functionality (Fn) varying from 2.7 to 4.3; a hydroxyl value (OHv) of 250 to 500 mg KOH/g, and a viscosity measured at 20 °C of between 350 mPa.s and 2300 mPa.s. Preferably, the polyol or polyol blend has a Fn varying from 3.0 to 3.7; an OHv of 325 to 425 mg KOH/g; and a viscosity of between 400 mPa.s and 1800 mPa.s. More preferably, in view of long term stability, the polyol or polyol blend is based on the elements C, H, and O only. It will be appreciated that the viscosity may also be measured at other temperatures, resulting in slightly different values.

Examples of polyols suitable in the present invention are alkoxylated diols, triols and higher OH-functional starting materials, such as propoxylated mono- or diethylene glycol, propoxylated glycerol, propoxylated pentaerythritol, propoxylated sorbitol, etc. Other examples of suitable polyols, are polyols prepared by ethoxylating or ethoxylating/propoxylating said starting materials.

A suitable formulation contains 2 to 7 parts by weight of water per 100 parts by weight polyol (php), and preferably 3 to 6 php. The amount of polyisocyanate to be used, indicated by the isocyanate index, varies from 100 to 150, preferably from 110 to 140. This amount of polyisocyanate corresponds to the usual amount as used in CFC containing formulations which have shown acceptable properties. However, it will be appreciated that said amount of polyisocyanate to be used may be outside this preferred range without departing from the gist of the invention. In addition, it is well known in the art to add auxiliaries such as catalysts, silicone oil such as polydimethylsiloxanes, fillers, flame retardants and other additives to the formulation.

Examples of polyisocyanates useful in the process of preparing polyurethane foams for e.g. pipe-insulation are well-known in the art, and are selected from, for instance, aliphatic, cycloaliphatic, and preferably aromatic polyisocyanates; and combinations thereof. Representatives of these types are diisocyanates such as 2,4-toluene diisocyanate, 2,6-toluene diisocyanate, mixtures of 2,4- and 2,6-toluene diisocyanate, 1,5-naphthene diisocyanate, 2,4-methoxyphenyl diisocyanate, 4,4'-diphenylmethane diisocyanate, 4,4'-biphenylene diisocyanate, 3,3'-dimethoxy-4,4'-biphenylene diisocyanate, 3,3'-dimethyl-4,4'-biphenylene diisocyanate, and 3,3'-dimethyl-4,4'-diphenylmethane diisocyanate; triisocyanates such as 4,4',4"-triphenylmethane triisocyanate, and 2,4,6-toluene triisocyanate; and the tetraisocyanates such as 4,4'-dimethyl-2,2',5,5'-diphenylmethane tetraisocyanate; and polymeric isocyanates such as polymethylenepolyphenylene polyisocyanate.

Preferably polymethylenepolyphenylene polyisocyanate and 4,4'-diphenylmethane diisocyanate are used. Crude polyisocyanates, i.e., technical unpurified mixtures of polyisocyanates, may also be used in the compositions of the present invention, such as crude diphenylmethane diisocyanate obtained by the phosgenation of crude diphenylmethane diamine.

Preferably, the polyisocyanate has a viscosity of (nearly) the same magnitude as the polyol. Thus, and more preferred, the polyisocyanate has a viscosity measured at 20 °C of from 100 to 1800 mPa.s.

In order to form the in-situ polyurethane foam-core smoothly, a catalyst useful in preparing foams is employed in the usual manner. Suitable catalysts that may be used are described in European patent application No. 0,358,282, and include: tertiary amines such as, for example triethylenediamine, N-methylmorpholine, N-ethylmorpholine, diethylethanolamine, N-cocomorpholine, 1-methyl-4-dimethylaminoethylpiperazine, 3-methoxypropyldimethylamine, N,N,N'-trimethylisopropyl propylenediamine, 3-diethylaminopropyl-diethylamine, dimethylbenzylamine, dimethylcyclohexylamine, and the like; salts of organic acids with a variety of metals such as alkali metals, alkaline earth metals, Al, Sn, Pb, Mn, Co, Ni, and Cu, including, for example, sodium acetate, stannous octoate, stannous oleate, lead octoate, metallic driers such as manganese and cobalt naphthenate, and the like; and organometallic derivatives of tetravalent tin, trivalent and pentavalent As, Sb, and Bi and metal carbonyls of iron and cobalt, as well as other organometallic compounds such as disclosed in U.S. patent No. 2,846,408.

It will be appreciated that also combinations of any of the heretofore mentioned polyurethane catalysts may be employed. Usually, the amount of catalyst employed will vary in the range of from 0.01 to 5.0 php. More often, the amount of catalyst used is in the range from 0.2 to 2.0 php.

In addition to the foam formulations, the present invention also relates to the use of a softening point improving polyol (blend) in foam formulations employed in a process for preparing water-blown heat-insulating materials, which polyol or polyol blend has a Fn varying from 2.7 to 4.3; a OHv of from 250 to 500 mg KOH/g; and a viscosity measured at 20 °C of between 350 mPa.s and 2300 mPa.s. In other words, as compared to the commonly used polyol or polyol blend, which when used in water-blown foam-formulations result in a low softening point, the present polyol or polyol blend, since at least retaining a softening point of 130 °C comprises an improvement.

Finally, the invention relates to water-blown polyurethane foam heat-insulating materials having a softening point as measured by Thermo-Mechanical Analysis (TMA, determined by the onset point of the transition curve using conventional techniques) of more than 130 °C, and sufficient mechanical strength at (pipe) service temperature.

The foam formulation of the present invention; the use of a softening point improving polyol (blend) in the process for in-situ polymerisation of a water-containing foam formulation; and the water-blown heat-insulating material so prepared, are illustrated by the following examples, of which the first three are bottle experiments, (conventional test for determining "pipe-independent" foam properties) and number 4 is an example of pipe-insulation. All parts are by weight unless otherwise designated. In the examples below, the following abbreviations are used.

| | |
|---|---|
| polyol 1 | a pentaerythritol-based polyol (Fn = 4.0, OHv = 350 mg KOH/g, viscosity at 40 °C = 310 mm$^2$/s) |
| polyol 2 | a glycerol-based polyol (Fn = 3.0, OHv = 250 mg KOH/g, viscosity at 20 °C = 410 mPa.s |
| polyol 3 | a sorbitol/glycerol-based polyol (Fn = 4.3, OHv = 520 mg KOH/g, viscosity at 40 °C = 1100 mm$^2$/s) |
| Caradate 30 | (trademark), a crude MDI |
| Silicone oil | Tegostab (trademark), a grade obtained from Th. Goldschmidt A.G. |
| Dime 6 | (trademark), dimethylcyclohexylamine |

Examples 1 to 4

Examples 1 to 3 were conducted by preparing a formulation by weighing all the components except for the isocyanate compound and thoroughly mixing. An appropriate amount of this formulation was weighed into a plastic cup. An appropriate amount of isocyanate was then added and mixed vigorously. The mixture was poured in an aluminium bottle and the foam was allowed to rise. The physical properties were determined after 48 hours.

Example 4 was prepared using a similar procedure, however, mixing the polyol premix with the isocyanate component in a high pressure mixing unit, and dispensing the obtained mixture into a 6 m pipe having standard dimensions (nominal outer diameter of inner steel pipe, 60.3 mm; nominal outer diameter of outer HDPE pipe, 140 mm).

The foam properties were measured as follows:

| | |
|---|---|
| Density (kg/m$^3$) | ISO 845 |
| Softening point (°C) | TMA measurement (onset point of the the transition curve) |
| Axial shear strength (kPa) | CEN norm EN 253 |

| Foam formulation | 1 | 2 | 3 | 4 |
|---|---|---|---|---|
| polyol 1 (*) | 100 | | | |
| polyol 2 (*) | | 66.7 | 51.9 | 50.4 |
| polyol 3 (*) | | 33.3 | 48.1 | 49.6 |
| water | 4.2 | 5.0 | 6.0 | 4.9 |
| silicone oil | 1.5 | 3.0 | 3.0 | 3.0 |
| catalyst | 0.65 | 0.35 | 0.35 | 0.4 |
| Caradate 30 | 159.7 | 178.1 | 206.1 | 185.4 |
| (isocyanate index) | (110) | (115) | (115) | (115) |
| Viscosity of blend (*) in mPa.s at 20 °C | 1360 | 1040 | 1580 | 1680 |
| OHv of blend (*) in mg KOH/g | | 340 | 380 | 384 |
| Fn of blend (*) | 4.0 | 3.4 | 3.6 | 3.6 |

| Foam properties | 1 | 2 | 3 | 4 |
|---|---|---|---|---|
| Filling density, kg/m$^3$ | 90 | 80 | 80 | 96 |
| Core density, kg/m$^3$ | | | | > 60 |
| Overall density, kg/m$^3$ | | | | > 80 |
| Axial shear strength, kPa | | | | 120 |
| Softening point °C | 141 | 138 | 155 | 131 |

## Claims

1. A foam formulation, useful in the preparation of water-blown heat-insulating material, comprising (i) a polyol or polyol blend, (ii) one or more organic polyisocyanates, (iii) water, and (iv) auxiliary materials known in the art, characterized in that the polyol or polyol blend has an average nominal functionality (Fn) varying from 2.7 to 4.3; a hydroxyl value (OHv) of 250 to 500 mg KOH/g, and a viscosity measured at 20 ° C of between 350 mPa.s and 2300 mPa.s.

2. A foam formulation as claimed in claim 1, characterized in that the polyol or polyol blend (i) has a Fn varying from 3.0 to 3.7; an OHv of 325 to 425 mg KOH/g; and a viscosity of between 400 mPa.s and 1800 mPa.s.

3. A foam formulation as claimed in claim 1 or 2, characterized in that the polyol or polyol blend (i) is based on the elements C, H, and O only.

4. A foam formulation as claimed in any one of claims 1 to 3, characterized in that the polyol or polyol blend (i) is selected from alkoxylated diols, triols, or higher hydroxyl-functional starting materials.

5. A foam formulation as claimed in claim 4, characterized in that the polyol or the polyol blend (i) is selected from a propoxylated and/or ethoxylated mono- or diethylene glycol, glycerol, pentaerythritol, or sorbitol.

6. A foam formulation as claimed in any of claims 1 to 5, containing 2 to 7 parts by weight of water per 100 parts by weight polyol (php), preferably 3 to 6 php.

7. A foam formulation as claimed in any of claims 1 to 6, characterized in that the or each polyisocyanate is selected from (crude) 4,4'-diphenylmethane diisocyanate and polymethylenepolyphenylene polyisocyanate.

8. A foam formulation as claimed in any of claims 1 to 7, characterized in that the or each polyisocyanate has a viscosity measured at 20 °C of from 100 to 1800 mPa.s.

9. A foam formulation as claimed in any of claims 1 to 8, characterized in that the amount of polyisocyanate to be used, indicated by the isocyanate index, varies from 105 to 140, preferably from 110 to 125.

10. The use of a softening point improving polyol or polyol blend in foam formulations employed in a process for preparing water-blown heat-insulating materials, which polyol or polyol blend has a Fn varying from 2.7 to 4.3; a OHv of from 250 to 500 mg KOH/g; and a viscosity measured at 20 °C of between 350 mPa.s and 1800 mPa.s.

11. A water-blown polyurethane heat-insulating material, having a softening point (determined by TMA; the onset point of the transition curve) of more than 130 °C.

12. A foam formulation as claimed in claim 1, substantially as heretofore described with reference to the examples.

13. The use of a softening improving polyol or polyol blend as claimed in claim 10, substantially as heretofore described with reference to the examples.

14. A pipe-insulation as claimed in claim 11, substantially as heretofore described with reference to the examples.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| E | EP-A-0 372 539 (DOW)<br>* page 12, table III; example 16; page 13, table IV, example 16; page 14, tables V,VI, example 21 *<br>— — — | 1-4,6,7,9 | C 08 J 9/02<br>C 08 G 18/48<br>C 08 G 18/76 //<br>(C 08 J 9/02 |
| X | US-A-4 273 882 (R.J. RAYNOR)<br>* column 5, line 65 - column 6, line 2; example; claims *<br>— — — | 1,2,4-7,<br>10-14 | C 08 L 75:04 )<br>(C 08 G 18/48<br>C 08 G 101:00 ) |
| A | KUNSTSTOFFE vol. 72, no. 5, May 1982, pages 279-282, München, DE; W. KLINGELHOEFER: "Alternativen zu Fluor-kohlenwasserstoff als Treibmittel für Polyurethan-Hartschaumsysteme"<br>* the whole document *<br>— — — | 1-14 | |
| A | EP-A-0 091 828 (HITACHI)<br>* page 1, lines 2-5; page 2, line 4; page 3, line 7; examples; claims *<br>— — — | 1,2,4,5,10 | |
| D,A | EP-A-0 358 282 (SHELL)<br>* the whole document *<br>— — — — — | 1-14 | |
| | | | **TECHNICAL FIELDS SEARCHED (Int. Cl.5)**<br><br>C 08 G<br>C 08 J |

The present search report has been drawn up for all claims

| Place of search | Date of completion of search | Examiner |
|---|---|---|
| Berlin | 04 December 90 | HOEPFNER W.W.G. |